# EUROPEAN PATENT APPLICATION

(11) **EP 4 817 762 A1**
(43) Date of publication of application: **07.10.2026**
(21) Application number: 25168098.9
(22) Date of filing: 02.04.2025
(51) Int. Cl.: B22F 1/12, B22F 7/06, B23K 26/34, B23K 35/30, C22C 33/02, C23C 24/10, F16D 65/00, F16D 69/02, C22C 38/22, C22C 38/26, F16D 69/00, B22F 7/08, C22C 29/04, B22F 3/115, B22F 5/10, B22F 9/02, B22F 7/00

(54) **POWDER MIXTURE**

(71) Applicant: Treibacher Industrie AG, 9330 Treibach-Althofen (AT); Mercedes-Benz Group AG, 70372 Stuttgart (DE)
(72) Inventor: Demoly, Alban, 9020 Klagenfurt (AT); Köck, Michael, 9020 Klagenfurt (AT); Popa, Septimiu, 70569 Stuttgart (DE)
(74) Representative: Schwarz & Partner Patentanwälte GmbH

(57) **Abstract**

The present invention relates to a mixture suitable for producing wear and corrosion resistant layers comprising a ceramic powder and a stainless steel powder,
wherein said ceramic powder comprises
a) a mixture of a first component selected from the group consisting of carbides, carbonitrides, nitrides of Ti and mixtures thereof and
a second component selected from the group consisting of carbides, carbonitrides, nitrides of Mo, W, V, Nb and mixtures thereof, or
b) a solid solution consisting of Ti, a second metal M selected from the group of Mo, W, V, Nb and mixtures thereof, and a non-metal selected from the group consisting of C, N and mixtures thereof, or
c) a mixture of a) and b)
wherein the total amount of a) or b) or c) in said ceramic powder is at least 60 wt. %, preferably 70 wt. % to 99 wt. %
wherein in a) the weight ratio of the first component to the second component is from 70:30 to 98:2,
wherein in b) the weight ratio of Ti to the second metal M is from 70:30 to 98:2,
an organic binder,
wherein a content of metallic binders in the ceramic powder is at most 5 wt. %,
and wherein said stainless steel powder is a ferritic iron-based alloy, said alloy containing
- an amount of chromium of from 18 wt. % to 30 wt. %, preferably of from 21 wt.% to 23.5 wt.%
- an amount of silicone of below 1 wt.%
- an amount of carbon of below 0.1 wt.%
- an amount of nickel of below 0.5 wt.%
- an amount of molybdenum of from 4 wt.%% to 7 wt.%, preferably of from 4 wt.% to 5 wt.%
- an amount of niobium of from 1.3 wt.% to 1.9 wt.%

## Description

The present invention relates to a powder mixture for producing a wear and corrosion resistant layer, especially coating.

### Background of the Invention

In the tribological system of the brake, the surface of the brake pad contacts the surface of the brake disc under the application of a mechanical braking force. The interaction between the friction materials causes abrasive wear and, under the influence of atmospheric humidity and/or corrosive media from the immediate environment, corrosive attack of the brake disc surface, causing particulate matter emissions.

According to the latest EURO 7, new emission standards are envisaged bringing emission limits for motor vehicles that require a significant reduction in fine particulate matter, especially for non-exhaust particle, emissions starting from November 2026.

Hence, wear resistant friction materials are of particular interest to reduce brake emissions.

To increase wear resistance in the tribological system of the brake, brake discs mainly consist of grey cast iron on which one or more coating layers are applied. If more than one coating layers are applied, the top layer is called "top coating".

If only one layer is applied to the support, this is also referred to as a "monolayer" or "monolayer coating".

These definitions in the following also apply for applications other than brake discs.

Monolayer coatings on brake discs may be used e.g. in the rear axle of vehicles, or also on the front axle of smaller vehicles. The use of monolayer coatings on brake discs offers economic benefits as production and material costs are reduced compared to multi-layer coatings.

A powder proposed to be used for making a monolayer coating on a brake disc via laser cladding is available under the trade name "MetCoBrake^{™} 9501A". However, as shown further below, it turned out that the use of MetCoBrake^{™} 9501A as a coating on a brake disc led to high wear and partial delamination of the coating when brake tests were performed.

Conventional coatings can contain high Ni-contents from stainless steel components, which also contributes to sensitization (Ni allergies) in humans.

It is known in the art that wear resistance can be improved by adding carbides such as Cr₃C₂, WC or TiC as a hard component in the top layer of the coating, embedded in a stainless steel matrix (FeCr matrix). The widespread use of carbide composites as wear resistant materials is attributed to their unique combination of desired properties, such as high wear resistance and stiffness, respectable strength, and relatively low production costs.

For example, WO 2020/234146 A1 discloses a friction brake element for a motor vehicle comprising an antiwear layer of various carbides including chromium carbide, niobium carbide, titanium carbide, tungsten carbide, molybdenum carbide, and vanadium carbide.

Another example is disclosed in US 2013/136941 A1, describing a multifunctional coating for metallic substrates comprising two layers, wherein one layer comprises particles disposed in a metal or alloy matrix. Particles suitable for this can comprise metal carbides, metal nitrides, metal borides, metal silicides, ceramics, cemented carbides or cast carbides.

WO 2021/224308 A1 describes a vehicle brake component, having a metallic base body surface provided with a coating comprising hard materials such as tungsten carbides, chromium carbides, titanium carbides, vanadium carbides, or silicon carbides.

To produce a coating on a metal substrate, an alloy feedstock including carbide-forming metals such as Ti, V, Cr can also be used. The feedstock is melted during the process and carbide-forming metals precipitate as finely distributed carbides during cooling either with added carbon or with the carbon from the steel alloy.

For instance, the coating can be applied by laser cladding. During laser cladding, a powder or wire feedstock material is melted and consolidated by use of a laser in order to coat a substrate. This method is often used to improve mechanical properties or increase corrosion resistance of a material.

EP 4 029 966 A1 discloses a method for producing a brake gray cast iron brake disc, wherein a coating including carbides is applied on the brake surface by laser cladding.

DE 10 2020 203 412 A1 describes a process for the production of a protective top layer on a brake disc by laser cladding of a NbC metal matrix powder or a Cr₃C₂ metal matrix powder.

Furthermore, WO 2021/007209 A1 discloses an iron-based feedstock for various deposition processes, such as ultra-high speed laser cladding to form a coating with certain microstructural features and performance characteristics.

It also turned out that high carbide content can also decrease the risk of metal pick-up (MPU). MPU is a problematic phenomenon in automotive disc brakes. MPU generally forms metal lumps on the surface of the brake pad. If brake pads have MPU, during breaking, they would cause grooving of the disc rotor, generating braking noise and deteriorating the brake performance. MPU is a phenomenon dependent on many factors, such as climate, general road conditions etc. and, thus, not easily quantifiable.

However, it turned out that that high carbide content does not only improve wear resistance of top layers of brake discs but is also associated with various problems.

A problem is that when adding higher amounts of carbides, the possibility of cladding the materials decreases as the material becomes very prone to cracks with increased amounts of carbides already immediately after the cladding and even before mechanical stress.

Cracks through the coating are fatal for the corrosion resistance if the cracks connect the surface with the substrate. Corrosive media can reach the substrate and corrode the bonding zone, causing rusting of the substrate, weakening the bonding between the substrate and the coating and finally cause the delamination of the coating from the substrate. This will visually and functionally destroy the coating.

Efforts were already made in the past to produce wear and corrosion resistant coatings.

For instance, WO 2022/223835 A1 discloses a mixture of a stainless steel powder and chromium carbide and at least one other carbide having a melting point higher than chromium carbide. The obtained top coating is described to contain at least 30% by volume of two dispersed carbides. WO 2022/223835 A1 mentions that the obtained top coatings are substantially free from cracks, however, the experimental data clearly shows cracks in the coating after laser cladding.

Also, commercially available carbide-based powders with FeCr matrices are advertised as environmentally friendly alternative to hard metals with nickel or cobalt based matrices for the production of wear resistant coatings. As example, the commercially available powder GTV 81.61.8S (GTV Verschleißschutz GmbH) contains TiC and FeCr in a ratio of 70 wt. % to 30 wt. %. Carbide powders such as TiC/FeCr or NbC are usually agglomerated and sintered or crushed and sintered for producing coatings. However, the crack-free top coatings made by the above-mentioned commercial powder do not contain more than 30 vol. % of carbides in stainless steel matrices.

Up to now, the highest amount of carbides in a laser cladded top coating for a brake disc that can be employed without any cracks is about 30 vol. % (based on total amount of coating).

In order to avoid cracking, different means and methods have been sought that are suitable to produce stress and crack-free protective coatings. Furthermore, especially Ni-free metal alloys with sufficient carbide content are needed to meet the requirements of future emission standards.

However, no suitable prematerials for the production of top coatings with high carbide contents of at least 30 vol. % and low sensitivity of cracks have yet been found.

With regard to monolayer coatings, it has been found difficult to produce monolayer coatings which are sufficiently resistant to mechanical stress after cladding.

It has therefore been found that the above-addressed problems make it especially difficult to formulate powders to produce crack-free and wear resistant coatings.

Cermets (combinations of metals and Ti compounds such as TiC, TiN and the like) are alternative materials showing excellent hardness and wear resistance:
For example, Qiu et al. describe the effects of Mo₂C addition on the frictional properties of Ti(C,N)-based cermets. The cermets mentioned in this publication are used as dense bodies for cutting tools or molds, but not for coating layers. Cermets contain a significant amount of metallic binders. In this study, it has been shown that 6 wt. % Mo₂C improved the hardness. It is also reported that the excessive carbide reduced the toughness and increased the risk of cracking (Qiu et al., 2023, Materials, 16, 5645, doi: 10.3390/ma16165645).

It is also reported that the properties and the microstructure of cermets depend on the composition of the prematerials with respect to the carbon-nitrogen ratio, the stoichiometry of the hard phase and a significant amount of the metallic Ni/Co binder composition (Ettmayer et al., 1995, International Journal of Refractory Metals & Hard Materials, 13, 343-351, doi: 10.1016/0263-4368(95)00027-G).

Lengauer and Scagnetto provide an overview of the metallurgy of Ti(C,N)-based cermets with respect to microstructure formation during sintering. It is disclosed that an alloy of the iron metals Fe, Co, Ni are commonly used as metallic binders as well as multi-component binders such as Co, Ni, Fe, Cr, V, and Al (Lengauer and Scagnetto, 2018, Solid State Phenomena, 274, 53-100, doi: 10.4028/www.scientific.net/SSP.274.53).

The properties of TiC/Ni cermet systems comprising significant amounts of metallic binders are also described in further publications (Liu et al., 2005, Journal of Wuhan University of Technology-Mater. Sci. Ed, 20, 35-39, doi: 10.1007/BF02835022 and Liu and Liu, 2010, Advanced Materials Research, 177, 378-381, doi: 10.4028/www.scientific.net/AMR.177.378).

Zhou et al. also report the effect of Mo and Mo₂C on microstructure and properties of Ti(C,N)-based cermets containing metallic binders. The results show that a Mo₂C content of less than 5 wt. % is advantageous to the microstructures and mechanical properties of the cermets, wherein the influence on the production of coatings for brake systems was not investigated (Zhou, 2009, International Journal of Refractory Metals & Hard Materials, 27, 26-32, doi: 10.1016/j.ijrmhm.2008.01.011).

All described state of the art cermet powders either need the addition of significant amounts of metallic binders and/or need to be sintered to produce wear and corrosion resistant coatings. However, the presence of metallic binders further contributes to the emission of particulate matter during braking.

Zhang et al describe the effects of Molybdenum on the microstructure of Fe-based composite laser cladding coatings. It is noted that cracks were found in the coating once the addition of FeMo₇₀ exceeded 9 wt. %.

Further state of the art is disclosed in Zhang Hao et al, Int. J. Adv. Manuf. Tech., 120 (1-2), 2022, 1265-1280; Spranger F et al., Appl. Surf. Science 467, 2018, 493-504; Cutard T. "Microstructure and mechanical properties of Ti(C.N)-M2C-(Ni,Co) cermets, XP093146799, 1997, https://hal.science/hal-01847836/document; US 5,682,595 A; US 2009/121197 A1, CN 111 203 670 A; Techel A. et al, J. Therm. Spray Tech. 16 (3) 2007, 374-380; Pejakovic V et al., Materials and Design 207, 2021, p-109847; DE 10 2023 118027; Wank A. "Prozess- und Werkstoffentwicklung für Reibflächenbeschichtungen von Fahrzeugbremsen", IOT Kolloquium 12/2024; DE 10 2017 113944; DE 10 2023 207017; EP 3 620 546; EP 3 973 206; EP 4 292 810; US 11,339,841; WO 2022/137189; WO 2022/137190 and in the brochure "Cladding and Hardfacing Powders", https://www.gtv-mbh.de/ Resources/Persistent/2/6/0/7/260787b32239543dd69caee11be1910717605efc/Claddi ng%20and%20Hardfacing%20Powders%20v1.5.pdf. (retrieved on 1 April 2025).

### Short Description of the Invention

It is the object of the present invention to overcome the drawbacks of the state of the art powders and methods to produce wear and corrosion resistant coatings. In the case of top coatings, it is also an object of the present invention to provide top coatings having a high content of hard components and still being crack-free immediately after cladding.

The object of the present invention is solved by a mixture according to claim 1.

The object of the present invention is especially solved by a mixture suitable for producing wear and corrosion resistant layers comprising a ceramic powder and a stainless steel powder, wherein said ceramic powder comprises
a) a mixture of a first component selected from the group consisting of carbides, carbonitrides, nitrides of Ti and mixtures thereof and
   a second component selected from the group consisting of carbides, carbonitrides, nitrides of Mo, W, V, Nb and mixtures thereof, or
b) a solid solution consisting of Ti, a second metal M selected from the group of Mo, W, V, Nb and mixtures thereof, and a non-metal selected from the group consisting of C, N and mixtures thereof, or
c) a mixture of a) and b)
   wherein the total amount of a) or b) or c) in said ceramic powder is at least 60 wt. %, preferably 70 wt. % to 99 wt. %
   wherein in a) the weight ratio of the first component to the second component is from 70:30 to 98:2,
   wherein in b) the weight ratio of Ti to the second metal M is from 70:30 to 98:2,
   an organic binder,
   wherein a content of metallic binders in the ceramic powder is at most 5 wt. %,
   and wherein said stainless steel powder is a ferritic iron-based alloy, said alloy containing
      - an amount of chromium of from 18 wt.% to 30 wt.%, preferably of from 21 wt.% to 23.5 wt.%
      - an amount of silicone of below 1 wt.%
      - an amount of carbon of below 0.1 wt.%
      - an amount of nickel of below 0.5 wt.%
      - an amount of molybdenum of from 4 wt.% to 7 wt.%, preferably of from 4 wt.% to 5 wt.%
      - an amount of niobium of from 1.3 wt.% to 1.9 wt.%

In the following the mixture containing the ceramic powder and the stainless steel powder is also referred to as "layer-forming mixture", in contrast to mixtures a) and c) of the ceramic powder itself. As will be set out below, the ceramic powder and the stainless steel powder may only be mixed to form the layer-forming mixture immediately before being applied to the surface to be protected, or even only *in situ* when applying both the ceramic powder and the stainless steel powder to the surface e.g. by a laser-cladding process.

The ceramic powder of the layer-forming mixture according to the present invention may comprise b) a solid solution consisting of Ti, a second metal M selected from the group of Mo, W, V, Nb and mixtures thereof, and a non-metal selected from the group consisting of C, N and mixtures thereof, wherein in b) the weight ratio of Ti to the second metal is from 70:30 to 98:2, an organic binder and a content of metallic binders in the powder of at most 5 wt. %.

The ceramic powder of the layer-forming mixture of the present invention may also comprise c) a mixture of a) and b), an organic binder, and a content of metallic binders in the powder of at most 5 wt. %

The layer-forming mixture of the present invention is characterized in that said ferritic iron-based alloy exclusively consists of ferritic phases. These ferritic phases are present in the stainless steel powder as employed, as well as in the layer formed.

Another aspect of the present invention relates to the use of the layer-forming mixture of the present invention for producing a wear and corrosion resistant layer, especially a coating.

Another aspect of the present invention relates to a wear and corrosion resistant layer, obtained by treating a surface with the layer-forming mixture according to the present invention.

A further aspect relates to a brake disc comprising the layer as defined herein as a coating.

### Short Description of the Figures

Fig. 1 shows a cross section of monolayer coating comprising TiCN (50/50) and Mo₂C mixed with a FeCrMoNb (GTV 80.99.1, GTV Verschleißschutz GmbH) stainless steel metal matrix after laser cladding according to the invention, after AMS 130 testing.
Fig. 2 shows a cross section of MetcoBrake^{™} 9501A monolayer coating after AMS 130 testing.
Fig. 3 shows a cross section of top layer coating comprising TiCN (50/50) and Mo₂C mixed with a FeCrMoNb (GTV 80.99.1, GTV Verschleißschutz GmbH) stainless steel metal matrix after laser cladding according to the invention, after AMS 130 testing.
Fig. 4 shows the position of the metallic alloy used according to the invention in a Schaeffler diagram. Said position is marked as a dotted rectangle.

### Detailed Description of the Invention

It turned out that the layer-forming mixture according to the invention is suitable to produce a protective layer having high resistance against mechanical stress and corrosion.

In the case of top coatings, the layer-forming mixture according to the invention in addition enables the production of layers with high content of carbides or similar hard components and without crack formation after cladding.

In the case of monolayer coatings, the layer-forming mixture according to the invention is suitable for producing layers providing a high resistance against mechanical stress.

The ceramic powder of the layer-forming mixture according to the invention contains metallic binders in an amount of at most 5 wt.%. Most preferably the ceramic powder is essentially free of metallic binders, in contrast to state of the art cermet powders for coating application which contain significant amounts of metallic binders, such as nickel, cobalt, iron, copper, silver, chromium, zirconium, silicon, vanadium, and combinations thereof. The term "essentially free of metallic binders" is understood to include powders that may contain metallic impurities, but only to an amount that would not have a binding effect on the non-metallic constituents, such as up to 1.5 wt.%.

It has been found that the use of an organic binder in the ceramic powder instead of metallic binders surprisingly leads to the required properties of the powder, while only limited amounts of metallic binders or even no metallic binders are necessary.

The obtained layer of the present invention shows highly desirable properties, especially improved wear resistance during braking and components lifetime as compared with alternative materials on the market.

Mixture a) of the ceramic powder is characterized in that the weight ratio of the first component to the second component is preferably from 80:20 to 98:2, preferably from 85:15 to 95:5.

Mixture b) of the ceramic powder may be characterized in that the weight ratio of Ti to the second metal M is from 80:20 to 98:2, preferably from 85:15 to 95:5.

In the case of employing carbonitrides as component, the ratio of C to N may be varied, and may be in the range of 1:99 to 99:1, such as 10:90 to 70:30, especially C:N = 10:90 or C:N = 50:50 or C:N = 70:30. Thus, a designation like "TiCN (50/50)" means that in the TiCN the ratio of C:N = 50:50. The same applies to the ratio of C to N in a solid solution b).

It has been found that the ceramic powder of the mixture of the present invention, comprising preferably no metallic binders but organic binders, is very useful as a component for forming wear and corrosion resistant layers.

Preferably, in mixture a) the first and the second component are carbides and/or carbonitrides.

In the following, however, the term "carbides" is also used representative for other possible non-metallic parts of the components used, i.e. carbonitrides, nitrides etc.

Preferably, solid solution b) is a carbonitride solid solution.

Generally, the term "solid solution" denotes a single homogeneous phase formed from Ti, the second metal M and the non-metal C and/or N. Thus, a particle formed by said solid solution has a substantially homogeneous composition over its whole cross-section.

Solid solutions of Ti, a second metal M and C and/or N can be produced in a manner known per se via carbothermal synthesis reacting either the Ti in metallic form and the second metal M in metallic form, or reacting oxides of Ti and M, or one of the two metals in metallic form and the other metal in oxide form, and a carbon source in a nitrogen containing atmosphere.

Preferably, mixture a) of the ceramic powder is characterized in that it comprises carbides and/or carbonitrides of Ti as the first component and carbides of Mo as the second component. The carbide of Mo is preferably Mo₂C. Surprisingly, it turned out that titanium carbide and/or carbonitride (TiC and/or TiCN) hard phase agglomerates in combination with Mo₂C show exceptional good results in terms of producing wear and corrosion resistant coatings.

Also, the second metal M in solid solution b) is preferably Mo. Preferably, solid solution b) is a carbonitride solid solution of (Ti,Mo)(C,N).

It has been found that Mo₂C, upon converting the ceramic powder into a layer such as by laser cladding, seems to hinder the dissolution of the first component or carbide phase of the first component into the metallic matrix due to the additional carbides in the ceramic powder.

This means, for top coatings, that the layer-forming mixture according to the invention is suitable to produce layers with high content of carbides or similar hard components and without crack formation.

Hence, a crack-free wear and abrasion resistant laser cladded top layer coating with a carbide content of at least 30 vol. % and up to even 60 vol. % can be obtained with the ceramic powder comprising TiCN and/or TiC and Mo₂C. Furthermore, MPU can be reduced due to the high carbide content.

Similarly, in a solid solution containing Ti and the second metal M, especially Mo, a very high content of the hard phase, e.g. a carbonitride phase in the resulting laser cladded layer without the formation of cracks could be observed.

With regard to monolayer coatings, it was found that such solid solution contributes to excellent resistance of the layer mechanical stress.

The stainless steel powder of the mixture of the present invention is a ferritic iron-based alloy. Said alloy contains an amount of chromium of from 18 wt.% to 30 wt.%, preferably of from 21 wt.% to 23.5 wt.%, an amount of silicone of below 1 wt.%, an amount of carbon of below 0.1 wt.%, an amount of nickel of below 0.5 wt.%, an amount of molybdenum of from 4 wt.% to 7 wt.%, preferably of from 4 wt.% to 5 wt.%, an amount of niobium of from 1.3 wt.% to 1.9 wt.%. This list of components does not exclude the presence of unavoidable contaminations of e.g. silicone, carbon, nickel or also other unavoidable contaminations.

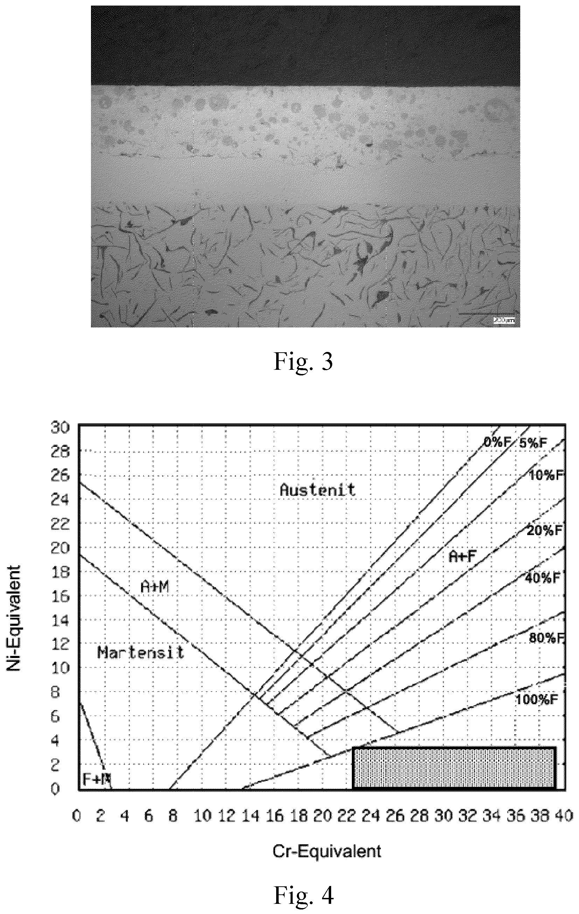

The mixture of the present invention is preferably characterized in that said ferritic iron-based alloy exclusively consists of ferritic phases. This is depicted in the Schaeffler diagram according to Fig. 4 (dotted rectangle).

Stainless steel powders fulfilling the above definitions are available under the trademarks GTV 80.99.1 as well as LSN F-BD18-BR6.

In a preferred embodiment of the present invention, the ceramic powder of the mixture is characterized in that the organic binder is selected from the group consisting of polyvinylalcohols, cellulose-based binders, and mixtures thereof. Preferably the organic binder is a polyvinylalcohol binder.

As will be set out further below, the ceramic powder may be produced by a process including the step of spray-drying mixture a) or the solid solution b) or mixture c), and the organic binder. Preferably, the ceramic powder is non-sintered.

The organic binder can be soluble in water or in organic solvents. Preferably, the organic binder is a water soluble polymer that forms networks during spray-drying and thus binds the other components of the ceramic powders together. Alternatively, the organic binder can be at least one polymerizable monomer that can be polymerized during spray drying.

The amount of organic binder in the ceramic powder may range from 0.01 to 10 wt. %, such as 1 to 5 wt. %.

The ceramic powder may contain mixture a), solid solution b) or mixture c) in an amount of at least 80 wt.%, such as at least 90 wt.% or at least 95 wt.%.

The ceramic powder may contain, in addition to mixture a), solid solution b) or mixture c), further hard components selected from the group of metal carbides, metal carbonitrides or metal nitrides other than those specified for mixture a).

The ceramic powder is contained in the layer-forming mixture according to the present invention in an amount of less than 50 wt. %.

In a preferred embodiment, with regard to form top-coating layers the amount of the ceramic powder in the layer-forming mixture of the invention ranges from 5 to 30 wt. %, preferably from 10 to 25 wt. %. It appears that saturation is reached at a weight ratio of 25 wt. % or more, meaning that the carbide content (vol. %) in a layer formed from the powder mixture cannot be further increased by a higher weight ratio of the ceramic powder in the mixture with stainless steel powder.

With regard to monolayer coatings, the amount of the ceramic powder of the invention in said layer-forming mixture may also range from 5 to 30 wt. %, however preferably from 5 to 20 wt. %, and more preferably from 8 to 15 wt. %

The layer-forming mixture of the present invention preferably contains at least 95% by weight, most preferably at least 99% by weight of the ceramic powder and the stainless steel powder.

In a further preferred embodiment, the layer-forming mixture essentially consists of said ceramic powder and the stainless steel powder.

Another aspect of the present invention relates to the use of the layer-forming mixture for producing a wear and corrosion resistant layer.

Preferably, the layer formed is a coating.

According to another preferred embodiment of the present invention the layer is a coating for a brake disc.

The layer may be a monolayer coating or a top coating. The embodiment of a top coating includes coatings with two layers (the top coating being the layer according to the present invention), but also embodiments with more than two layers, i.e. more than one layer between the top coating and the surface to be coated.

The mixture of the ceramic powder and the stainless steel powder as used may be applied to a surface by cladding.

The term "cladding", as used herein, refers to the process of covering or layer surfaces of a structure to protect to improve e.g., resistance. Cladding can include thermal spray cladding or laser cladding. Thermal spray cladding encompasses a variety of processes, as e.g. mentioned in WO 2022/137190 A1, such as cold spray cladding, high velocity oxygen fuel spraying (HVOF), high velocity air fuel spraying (HVAF), high-velocity suspension flame spraying (HVSFS), atmospheric plasma spraying (APS), and wire arc spraying, using a gas or electricity to create a flame in order to melt a wire or powder materials and apply them to a substrate. In cold spray cladding, solid powders are accelerated in a supersonic gas jet to velocities up to 1200 m/s. During contact with the substrate, particles undergo plastic deformation and adhere to the surface.

Preferably, the treatment is laser cladding. "Laser cladding" means a manufacturing process that deposits a metallic material onto a surface using a laser beam as the heat source. The substance is melted, fused to the surface, and then typically becomes harder and more resistant to wear than the base material.

Especially in the case of laser cladding the mixture of the ceramic powder and the stainless steel powder may be prepared either before feeding it to the laser beam, especially immediately before feeding it to the laser beam, or *in situ* by feeding both powders separately into the laser beam, whereupon the mixture is formed and melted immediately before being reaching the surface to be coated. Such *in situ* formation is also possible in the framework of other cladding techniques.

Preferably, the layer is applied by high-speed laser cladding. High-speed laser cladding, also referred to as extreme high-speed laser cladding (EHLA) or ultra-high-speed laser cladding (UHSLC), means a laser surface treatment technology with cladding speeds greater than 20 m/min and up to 400 m/min, depending on properties of the powder and substrate. High-speed laser cladding can be used as an economically viable alternative to thermal spray technologies for corrosion and wear protection.

Typical ranges of process parameters of high-speed laser cladding can be as follows:
Laser power: 6 - 22 kW
Powder mixture feed rate: 100 - 250 g/min
Cladding speed: 40 - 400 m/min
Shielding gas flow: 20 - 50 l/min
Carbide feed: 8 - 30 wt. %
Carrier gas flow: 1 - 6 l/min
Powder nozzle diameter: 1.5 - 2.5 mm
Working distance: 25 mm
Angle between nozzle and surface: 0° - 25°

Both monolayer or top coating layers can be produced employing these parameters.

In case of the monolayer, the laser cladded layer may have a content of hard materials of from 2 to 20 wt. %, preferably of from 8 to 14 wt. %. In case of the top layer, the laser cladded layer may have a content of hard particles of from 5 to 29 wt. %, preferably of from 11 to 23 wt. %, particularly preferred of from 14 to 20 wt. %.

Another aspect of the present invention relates to a method for producing wear and corrosion resistant layers using the layer-forming mixture of the present invention. All embodiments described above apply to this method mutatis mutandis.

Another aspect of the present invention relates to a wear and corrosion resistant layer that is obtainable by treating a surface with the mixture of the invention as described above.

The layer according to the present invention may particularly be obtained by treating said surface by laser cladding.

In case of a top coating, the layer-forming mixture according to the invention offers the production of layers with high content of carbides or similar hard components and without crack formation.

Preferably, the laser cladded top layer has a content of mixture a), or solid solution b) or mixture c) of at least 20 vol. %, preferably from 25 to 45 vol. %.

If, on the other hand, the surface is treated by thermal spray cladding, the maximum content of mixture a), or solid solution b) or mixture c) in the formed layer can be about 80 vol %.

It was found that a crack-free top coating layer can be obtained with a content of mixture a), or solid solution b) or mixture c) of at least 20 vol. % of the layer and even more. The obtained layer according to the invention shows high fracture toughness and thermal conductivity and is able to dissipate the forces and temperatures acting on it without cracking.

In case of a monolayer coating the layer-forming mixture according to the invention is suitable for producing layers providing a high resistance against mechanical stress.

The laser cladded monolayer may have a content of mixture a), or solid solution b) or mixture c) of up to 30 vol. %, preferably from 15 to 25 vol. %.

The carbide content can be measured via optical measurement and digital analysis, as further set out below.

The obtained monolayer is substantially free of cracks. Further, it has been found that the resistance of the monolayer against very intensive mechanical stress (brake test) is significantly improved compared to alternative materials on the market.

In a particular embodiment, said coating is a coating of a brake disc.

The layer-forming mixture of the present invention may also be used in other applications than coatings for brake discs of passenger cars, including as an admixture for brake discs coatings of trucks, trains or construction vehicles.

The ceramic powder can be produced by i) mixing mixture a), or solid solution b) or mixture c) with at least one organic binder and optionally the metallic binder, ii) spray drying said mixture, and iii) optionally sintering said spray dried mixture.

For all embodiments mentioned above, the coating can either be a top or monolayer coating.

Spray drying is important to form the agglomerates by sticking together the components. In contrast to e.g., cermets, sintering of the mixture of the two components and the organic binder is not necessary. Optionally, the spray dried mixture can also be sintered. Preferably, the spray dried mixture is not sintered. Thus, preferably, the powder is non-sintered.

Preferably, the spray dried ceramic powder is flowable and has a particle size distribution in the lower µm range to be further used for cladding, preferably for laser cladding.

The spray dried ceramic powder may have a particle size distribution with a d₁₀ of less than µm 30 µm, preferably between 10 and 25 µm.

The spray dried ceramic powder may have a particle size distribution with a d₅₀ of less than 60 µm, preferably between 20 and 50 µm.

The term "particle size" as used herein refers to the d₁₀ value as determined from the particle size distribution. The d₅₀ value is known as median diameter or medium value of the particle size distribution, being determined from a volume based representation or from a number based representation. In the present application, all dx values refer to the volume based representation, i.e. the particle diameter at "x" vol. % in the cumulative distribution (e.g. a d₁₀ of 100 µm means that 10 vol. % of the particles have a smaller diameter than 100 µm).

In the present invention, the particle size distribution (PSD) was determined using laser diffraction particle analysis, preferably using a "Microtrac" particle analyzer. The particle size of the samples described herein were measured with a Microtrac S3550 particle analyzer in the dry mode.

The particle size measurements were performed with a powder sample volume in the range from 3 to 6 mL (0.125-0.25 US tea spoon). This sample was placed on the storage plate of the "Turbotrac" disperser. The process was automatically controlled by the auto sequence of the Microtrac S3550. The equipment settings used were "high shear" on level 9 to 10, flushing air pressure 0.01 MPa and particle size analysis mode was absorption. The PSD measurement range of the Microtrac S3550 in dry mode is 0.24 µm to 1408 µm.

The PSD of the ceramic powder is preferably measured after spray drying.

The flowability of the spray dried ceramic powder might be between 40s/50g and 70s/50g, preferably between 50s/50g and 60s/50 g.

The "flowability" refers to the time taken by 50 gram of the powder to flow through a Hall flowmeter funnel. The flowability can be measured as mentioned below.

The ceramic powder as defined herein can be produced by mixing the organic binder in total weight ratio of 0.01 to 10 wt. %.

The organic binder may be selected from the group consisting of polyvinylalcohols, cellulose-based binders, and mixtures thereof.

### Examples

### Example 1: TiCN 50/50+5Mo2C

Titanium carbonitride powder (Treibacher Industrie AG, Austria) was provided. The powder was obtained by carbothermal synthesis and having a particle size of 1.80 µm, a total carbon content of 10.4 wt. %, a total content of nitrogen of 10.8 wt.% an impurity content (wt. %) of 0.006, 0.23, 0.12 for respectively sulfur, oxygen, free carbon. Titanium content was as balance.

Molybdenum carbide (Mo2C) powder (Treibacher Industrie AG, Austria) was provided. The powder was obtained by carbothermal synthesis having a grain size of 1.6 µm, a carbon content of 5.9 wt. %, an impurity content (wt. %) lower than 0.002, 0.25, 0.1, 0.1 for respectively sulfur, oxygen, free carbon, and sum of other metallic impurities. Molybdenum content was as balance.

The grain size was measured using a Fisher Sub-Sieve-Sizer (FSSS). The total and free carbon as well as sulfur contents were measured using carrier gas hot extraction (LECO company, C/S-Analysator CS-744_2). The oxygen and nitrogen were measured using carrier gas hot extraction (LECO Company, O/N-Analysator TC 500 C). The impurity content was measured using ICP OES (ICPOED 5110DV Agilent) after complete acid dissolution.

In a first step, a 2 wt. % organic polyvinylalcohol binder (Optapix PAF 46; Zschimmer und Schwarz GmbH & Co K, Germany) and 0.03 wt. % of a wetting agent (Glydol N109; from Zschimmer und Schwarz GmbH & Co KG, Germany) with respect to the total carbide content were homogenized with deionized water.

The raw materials were added to the mixture in order to obtain a solid content of 65 to 67% wt. % in the slurry and a carbide share of 95 wt. % and 5 wt. % for titanium carbonitride and molybdenum carbide respectively. After completing the carbide addition, the slurry was further homogenized between 25 and 35 minutes. The stirring step was carried out with a variable rotating speed between 400 to 800 rpm to avoid foam formation.

After homogenization, the slurry was spray dried in a Vettertec-Spray-Dryer. Following spraying parameters were set: Air temperature of 280°C and 115°C for inlet and outlet respectively, atomizer wheel rotating speed of 13,000 rpm, 27% Fan speed. The spray dried ceramic powder showed an average grain size d50 of 42.7 µm and good flowability with 53 s /50 g. Analysis was performed by PSD measurement (Microtrac S3550 dry measurement) and SEM, Hall-Flow measurement.

### Example 2: Solid Solution of Ti_{0,95}Mo_{0,05}CN 50/50

Titanium molybdenum mixed carbonitride powder (Treibacher Industrie AG, Austria) was provided. The powder was obtained by a single step carbothermal synthesis and having a particle size of 1.7 µm, a total carbon content of 10.4 wt. %, a total content of nitrogen of 10.4 wt.% an impurity content (wt. %) of 0.002, 0.2, 0.1, 0.2, 0.8 for respectively sulfur, oxygen, free carbon, tungsten and other metallic impurities. Titanium and molybdenum contents were 74.3 wt.% and 4.0 wt.% respectively.

The grain size was measured using a Fisher Sub-Sieve-Sizer (FSSS). The total and free carbon as well as sulfur contents were measured using carrier gas hot extraction (LECO company, C/S-Analysator CS-744_2). The oxygen and nitrogen were measured using carrier gas hot extraction (LECO Company, O/N-Analysator TC 500 C). The impurity content was measured using ICP OES (ICPOED 5110DV Agilent) after complete acid dissolution.

In a first step, a 2 wt. % organic polyvinylalcohol binder (Optapix PAF 46; Zschimmer und Schwarz GmbH & Co K, Germany) and 0.03 wt. % of a wetting agent (Glydol N109; from Zschimmer und Schwarz GmbH & Co KG, Germany) with respect to the total carbide content were homogenized with deionized water.

The mixed carbonitride powder was added to the mixture in order to obtain a solid content of 65 to 67% wt. % in the slurry. After completing the carbide addition, the slurry was further homogenized between 25 and 35 minutes. The stirring step was carried out with a variable rotating speed between 400 to 800 rpm to avoid foam formation.

After homogenization, the slurry was spray dried in a Vettertec-Spray-Dryer. Following spraying parameters were set: Air temperature of 280°C and 115°C for inlet and outlet respectively, atomizer wheel rotating speed of 13,100 rpm, 27% Fan speed. The spray dried ceramic powder showed an average grain size d50 of 46.2 µm and good flowability with 59 s /50 g. Analysis was performed by PSD measurement (Microtrac S3550 dry measurement) and SEM, Hall-Flow measurement.

### Production of coatings

The tests were performed on gray cast iron substrates. The monolayer and top layer coatings were cladded with the aid of a diode laser, Laserline LDF 7000- 40. The powders of the Examples well as the stainless steel powders were separately injected from a gravimetric powder feeding system and mixed in a powder focus above the laser focus of the laser.

In the case of monolayer coatings, the metal matrix and hard material were directly laser cladded on gray cast iron brake disc.

Laser cladding was carried out under following parameters:
Laser power: 22 kW
Powder mixture feed rate: 210 g/min
Cladding speed: 150 m/min
Shielding gas flow: 20 - 50 l/min (100 % Argon)
Carrier gas flow: 3 l/min
Powder nozzle diameter: 1.75 mm
Working distance: 25 mm
Angle between nozzle and surface: 0°

### Characterization of the coatings

The total carbide content of some of the coatings obtained was determined by using a Keyence Digital Microscope VHX-7000.

Three coatings of each cladded powder mixture were provided for analysis. The samples were polished with sandpaper with increasingly fine grit (QATM P80 - P320 - P800 - P1200) at 300 rpm for 3 min each followed by manual polishing with P2500 grit parallel to the layer and final polishing with 3 µm and 1 µm ATM diamond suspension. Bright-field images were taken at a 500X magnification of each sample. The automatic area measurement (grain size) module of the image analysis system (VHX 7000N 3.0.34.332 System Version 1.01) of Keyence Digital Microscope VHX-7000 was used for total carbide content determination using the following settings:
Lighting: coaxial 127
Brightness: auto 80
Gain: Preset 0db
White balance: manual R 1.75, G 1.01, B 3.60
Blur image, use HDR mode with settings brightness 40, texture 75, contrast 60 and hue 50 and depth-of-field/3D.
Select "Brightness (normal)" extraction method in the "Area measurement (auto)" module. The color threshold of the images was adjusted accordingly by selecting mode: "Remove uneven brightness (weak) + Remove slight noise while maintaining shape" with "Extract by brightness": 5-10.

Carbides/Carbonitrides/solid solution appear as dark areas. Area percentage of carbides was determined and automated statistics were generated.

In Table 1, the mixtures used for monolayer coating are summarized. The monolayer coatings obtained were further exposed to AMS 130 test, as described below. The titanium/molybdenum weight ratio, the feeder set-up in wt% (indicating the ratio of ceramic powder to the stainless steel powder in the two separate feed streams which are then combined to form the mixture in the laser beam) as well as the hard material ("carbides") in vol.% in the coating obtained are listed. Mixture 1 comprises the ceramic powder according to example 1 and stainless steel powder GTV 80.99.1 for monolayer production according to the present invention. The mixtures as depicted in Table 1 have been used for monolayer deposition on brake disc rotor using High Speed Laser Cladding according to the parameters defined above. None of the monolayer coatings showed any cracks after laser cladding.

**Table 1: Applied Monolayer Coatings**

| **Mixture** | **Metal Matrix** | **Hard materials** | **Titanium / Molybdenum weight ratio** | **Feeder set-up Wt%** | **Hard Material in vol.% in coating** |
|---|---|---|---|---|---|
| **1** | FeCrMoNb (GTV 80.99.1) | TiCN50/50+5Mo2C (Example 1) | 94.25 / 5.75 | 10.9/89.1 | 19.5 |
| **2** | MetcoBrake^{™} 9501A | - | n.a. | n.a. | n.a. |

In table 2, mixture 3 comprising stainless steel powder GTV 80.99.1 and hard material ("carbides") according to example 1 used for top layer coating according to the invention is listed. The obtained top layer coating was further exposed to AMS 130 test, as described below.. Mixture 3 has been used for top layer deposition on brake disc rotor using High Speed Laser Cladding according to the parameters defined above. The top layer coating did not exhibit any cracks after laser cladding.

**Table 2: Applied Top Layer Coating exposed to AMS 130 test**

| **Mixture** | **Metal Matrix** | **Hard materials** | **Titanium / Molybdenum weight ratio** | **Feeder set-up Wt%** | **Hard Material in vol.% in coating** |
|---|---|---|---|---|---|
| **3** | FeCrMoNb (GTV 80.99.1) | TiCN50/50+5Mo2C (Example 1) | 94.25 / 5.75 | 16/84 | 29.5 |

In Table 3, the mixtures comprising stainless steel powder and hard materials used for further top layer coatings are summarized. These obtained top layer coatings were exposed to WLTP-Brake cycle test according to UN-ECE GTR24, as described below. Mixture 4 represents a mixture of stainless steel powder GTV 80.99.1 and hard material according to example 1 for top layer production according to the present invention. Mixture 5 relates to a mixture of stainless steel powder FeCrMn and hard material according to example 1 for top coating production.

**Table 3: Applied Top Layer Coatings exposed to WLTP-Brake cycle test**

| **Mixture** | **Metal Matrix** | **Hard Materials** |
|---|---|---|
| **4** | FeCrMoNb (GTV 80.99.1) | TiCN50/50+5Mo2C (Example 1) |
| **5** | FeCrMn | TiCN50/50+5Mo2C (Example 1) |

### Wear tests - Brake discs coated with monolayer

The brake discs coated with monolayers as described above, were exposed to the AMS 130 brake test at AVL List GmbH (Graz, Austria). The used brake discs were internally ventilated with a diameter and a thickness of 280 and 22 mm respectively. Before AMS 130 brake test performance, the coatings were polished to exhibit a layer thickness of about 150 µm.

The AMS 130 brake test establishes the braking distance and is internationally recognized. It was developed by the German car magazine Auto Motor und Sport and is used by the ADAC, the German automobile club, as well as by TÜV, the German technical inspection association. Hazard braking is performed by bringing an unloaded vehicle, with cold brakes and a speed of 100 km/h, to a stop. Immediately afterwards, emergency braking with warm brakes is performed 10 times in a row to bring the vehicle from 130 km/h to a stop. Warm braking provides information about the characteristics of the brakes since the temperature of the braking system increases.

Table 4 exhibits the test set-up for the brake discs coated with monolayers.

**Table 4: Test set-up for AMS 130 - brake discs coated with monolayer**

| | |
|---|---|
| Test procedure | AMS 130 |
| Brake disc | Internal ventilated: 280 x 22 |
| Brake pad | ATE 3002 GG |
| Vehicle mass | 1900 kg |

### Wear tests - Brake discs with top layer coating

The brake disc coated with top layer as described above, was exposed to the AMS 130 brake test at AVL List GmbH (Graz, Austria). The brake discs used for this test were internally ventilated with a diameter and a thickness of 318 and 30 mm respectively. Before AMS 130 brake test performance, the coatings were polished to exhibit a layer thickness of about 150 µm.

Table 5 exhibits the test set-up for the brake disc coated with the top layer.

**Table 5: Test set-up for AMS 130 - brake discs coated with top layers**

| | |
|---|---|
| Test procedure | AMS 130 |
| Brake disc | Internal ventilated: 318 x 30 |
| Brake pad | FER8106 GG |
| Vehicle mass | 2166 kg |

### Results of the Wear tests - Brake discs coated with monolayers

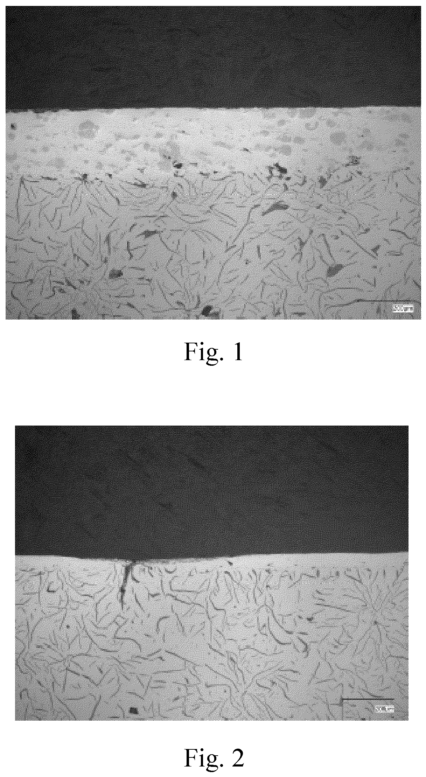

Table 6 exhibits the results of the AMS 130 test performed on monolayer coatings. The disc wear was determined in grams as follows: the discs were weighed once before and once after they were exposed to the AMS 130 test. The differences of their respective weights were determined. Further optical and microscopical inspection of the discs after completion of the AMS 130 was made (see Figures 1 to 2).

**Table 6: Results of the AMS 130 Test performed on Monolayer Coatings**

| **Mixture** | **Disc wear / g** | **Observations** |
|---|---|---|
| **1** | 3.8 | No crack visible |
| **2** | 15.8 | Coating partly torn away or deeply cracked |

Fig. 1 shows the monolayer coating obtained by laser cladding Mixture 1 according to the invention, after AMS 130 testing. The coating is completely crack-free even after intense mechanical stress

In contrast thereto, after AMS 130 testing, the monolayer coating obtained by laser cladding Mixture 2 (a state of the art material) is partly torn away and/or deeply cracked, as exhibited in Fig. 2.

The results clearly show the exceptional properties of the monolayer coatings obtained by laser cladding Mixture 1 according to the invention, after AMS 130 testing. As listed in Table 6 and compared to monolayer coating obtained by laser cladding Mixture 2, monolayer coating obtained by laser cladding Mixture 1 according to the invention exhibits a smooth crack free coating after the brake test and a high resistance against mechanical stress (very little disc wear). In contrast thereto, monolayer coating obtained by laser cladding Mixture 2 is deeply cracked or partially even torn away and shows significantly higher disc wear. This delamination of the coating is not only linked to a higher corrosion potential, but also to the issue of increased particulate matter emissions. Thus, superior characteristics of monolayer coatings obtained by laser cladding mixtures according to the invention can be achieved, compared to state of the art materials.

### Results of the Wear tests - Brake discs coated with top layer

Table 7 exhibits the results of the AMS 130 test performed on the brake disc with top layer coating. The disc wear was determined as described above. Further optical and microscopical inspection of the discs after completion of the AMS 130 was made (see Figure 3).

**Table 7: Results of the AMS 130 Test performed on the brake disc with top layer coating**

| **Mixture** | **Disc wear / g** | **Observations** |
|---|---|---|
| **3** | 0.6 | No crack visible |

Fig. 3 shows the top layer coating obtained by laser cladding Mixture 3 according to the invention. After AMS 130 testing. The coating is completely crack-free even after intense mechanical stress.

### WLTP-Brake cycle test according to UN-ECE GTR24

The Worldwide Light vehicle Test Procedures (WLTP) by the Global Technical Regulation (UN GTR) provides a worldwide harmonized methodology for the measurement of brake wear particulate matter and particle number emissions from brakes. The test cycle, system requirements, test conditions and equipment preparation are defined by the UN GTR.

In Table 8 the results of the WLTP-Brake cycle test are listed. The disc wear was determined in grams as follows: the discs were weighed once before and once after they were exposed to the WLTP-Brake test. The differences of their respective weights were determined. Particle Matter (PM₁₀) relates to the PM mass generated by the brake during the standardized WLTP-Brake procedure and the cut-off diameter was defined with 10 µm. Brake PM₁₀ emissions were measured according to UN GTR.

**Table 8: Results of the WLTP-Brake cycle test exposed to top layer coatings**

| **Mixture** | **Disc Wear / g** | **PM₁₀ WLTP-Brake No. 6 / mg/km** |
|---|---|---|
| **4** | 1.9 | 1.83 |
| **5** | 4.3 | 2.65 |

As shown in Table 8, the top layer coating obtained by laser cladding Mixture 4 according to the invention clearly shows exceptional properties regarding resistance against mechanical stress. Disc wear is significantly lower in comparison to the coating obtained by laser cladding Mixture 5. The high resistance against mechanical stress of top layer coating obtained by laser cladding Mixture 4 according to the invention additionally leads to lower PM₁₀ fine dust emissions, compared to the top layer coating obtained by laser cladding Mixture 5.

## Claims

1. A mixture suitable for producing wear and corrosion resistant layers comprising a ceramic powder and a stainless steel powder,
wherein said ceramic powder comprises
a) a mixture of a first component selected from the group consisting of carbides, carbonitrides, nitrides of Ti and mixtures thereof and
a second component selected from the group consisting of carbides, carbonitrides, nitrides of Mo, W, V, Nb and mixtures thereof, or
b) a solid solution consisting of Ti, a second metal M selected from the group of Mo, W, V, Nb and mixtures thereof, and a non-metal selected from the group consisting of C, N and mixtures thereof, or
c) a mixture of a) and b)
wherein the total amount of a) or b) or c) in said ceramic powder is at least 60 wt. %, preferably 70 wt. % to 99 wt. %
wherein in a) the weight ratio of the first component to the second component is from 70:30 to 98:2,
wherein in b) the weight ratio of Ti to the second metal M is from 70:30 to 98:2,
an organic binder,
wherein a content of metallic binders in the ceramic powder is at most 5 wt. %,
and wherein said stainless steel powder is a ferritic iron-based alloy, said alloy containing
- an amount of chromium of from 18 wt.% to 30 wt.%, preferably of from 21 wt.% to 23.5 wt.%
- an amount of silicone of below 1 wt.%
- an amount of carbon of below 0.1 wt.%
- an amount of nickel of below 0.5 wt.%
- an amount of molybdenum of from 4 wt.% to 7 wt.%, preferably of from 4 wt.% to 5 wt.%
- an amount of niobium of from 1.3 wt.% to 1.9 wt.%

2. Mixture according to claim 1, **characterized in that** said ferritic iron-based alloy exclusively consists of ferritic phases.

3. Mixture according to claim 1, or 2 **characterized in that** in a) the weight ratio of the first component to the second component is from 80:20 to 98:2, preferably from 85:15 to 95:5 and that in b) the weight ratio of Ti to the second metal M is from 80:20 to 98:2, preferably from 85:15 to 95:5.

4. Mixture according to any of the preceding claims, **characterized in that** the ceramic powder is essentially free of metallic binders.

5. Mixture according to any of the preceding claims, **characterized in that** the organic binder is selected from the group consisting of polyvinylalcohols, cellulose-based binders, and mixtures thereof.

6. Mixture according to any of the preceding claims, **characterized in that** the mixture a) comprises carbides and/or carbonitrides of Ti as the first component and carbides of Mo as the second component.

7. Mixture according to any of the preceding claims, **characterized in that** the solid solution b) is a carbonitride solid solution of (Ti,Mo)(C,N).

8. Mixture according to any of the preceding claims, **characterized in that** said ceramic powder is non-sintered.

9. Mixture according to any of the preceding claims, **characterized in that** said ceramic powder is contained in said mixture in an amount of less than 50 wt. %.

10. Mixture according to claim 9, **characterized in that** the amount of the ceramic powder in said mixture ranges from 5 to 30 wt. %, preferably from 10 to 25 wt. %.

11. Mixture according to claim 9 or 10, **characterized in that** the mixture contains at least 95% by weight, preferably at least 99%, and most preferably essentially consists of said ceramic powder and the stainless steel powder.

12. Use of a mixture according to any of the preceding claims for producing a wear and corrosion resistant layer.

13. Use according to claim 12, **characterized in that** the mixture is applied to a surface by cladding, especially laser cladding.

14. Use according to claim 12 and 13, **characterized in that** the mixture is prepared *in situ* upon applying said ceramic powder and said stainless steel powder onto the surface.

15. A wear and corrosion resistant layer, obtainable by treating a surface with a mixture as defined in any of claims 1 to 11.

16. Layer according to claim 15, **characterized in that** the treatment is laser cladding.

17. Layer according to claim 15 or 16 wherein said layer is a coating, preferably a coating of a brake disc.

18. A brake disc comprising the layer according to any of claims 15 to 17 as a coating.
